# EUROPÄISCHE PATENTSCHRIFT

(11) **EP 1 090 941 B1**
(45) Veröffentlichungstag und Bekanntmachung des Hinweises auf die Patenterteilung: **01.12.2004**
(21) Anmeldenummer: 00119171.7
(22) Anmeldetag: 05.09.2000
(51) Int. Cl.: C08G 18/76, C08G 18/10, B01D 63/02, C08G 18/65, C08G 18/36

(54) **Transparente, heissdampfsterilisierbare, nicht zytotoxische Polyurethan-Vergussmassen, Verfahren zu ihrer Herstellung und ihre Verwendung, insbesondere für medizinisch-technische Artikel**
Clear, steam-sterilisable, non-cytotoxic polyurethane casting compostitions, process for their preparation and their use, especially for medical-technical articles
Masses à couler de polyuréthane transparente, stérilisables à la vapeur, non-cytotoxiques, leur procédé de préparation et leur utilisation, en particulier pour des articles médicaux

(30) Priorität: 01.10.1999 DE 19947191
(43) Veröffentlichungstag der Anmeldung: 11.04.2001
(73) Patentinhaber: BASF AKTIENGESELLSCHAFT, 67056 Ludwigshafen (DE)
(72) Erfinder: Horn, Peter, Dr., 69118 Heidelberg (DE); Scupin, Hansjoachim, 67069 Ludwigshafen (DE)

(56) Entgegenhaltungen:
- EP-A- 0 538 673
- US-A- 4 391 964
- DATABASE WPI Section Ch, Week 199419 Derwent Publications Ltd., London, GB; Class A25, AN 1994-156700 XP002156794 & JP 06 100649 A (SANYO CHEM IND LTD), 12. April 1994 (1994-04-12)

## Beschreibung

Gegenstand der Erfindung sind transparente, heißdampfsterilisierbare, nicht zytotoxische Polyurethan-Vergußmassen, Verfahren zu ihrer Herstellung und ihre Verwendung, insbesondere für medizinisch-technische Artikel.

Polyurethan- im folgenden als PU bezeichnet, -Vergußmassen sind seit langem bekannt und vielfach in der Literatur beschrieben. Die Verwendung von PU-Vergußmassen zur Herstellung von Formteilen für medizinisch-technische Geräte, insbesondere als Einbettwerkstoff für Hohlfasern in Dialysatoren, ist ebenfalls bekannt. Auf Grund ihrer einfachen Handhabung sowie ihrer geringen Schrumpfung während der Aushärtung ist der Einsatz von PU-Vergußmassen für diesen Zweck besonders vorteilhaft.

Aus US-A-3,962,094 sind katalysatorfreie PU-Vergußmassen bekannt, die aus Rizinusöl-4,4'MDI-, Toluylendiisocyanat- oder, Phenylendiisocyanat-Prepolymeren mit endständigen NCO-Gruppen und einem Vernetzungsmittel hergestellt werden.

In DE-A-2 749 491 (US-A-4,170,559) werden PU-Vergußmassen beschrieben, die mittels Umsetzung eines Prepolymeren, bestehend aus Rizinusöl und Polyoxypropylenglykol sowie 4,4'MDI mit einem Vernetzungsmittel hergestellt werden.

Physiologisch unbedenkliche PU-Vergußmassen zum Einbetten von Hohlfasern werden nach Angaben von DD-A-251 565 hergestellt durch Umsetzung hochreaktiver, niedrigviskoser und lagerstabiler Mischprepolymerer, bestehend aus festen, hochreaktiven aromatischen Diisocyanaten und flüssigen, weniger reaktiven Diisocyanaten und Polyolen, mit Polyolen.

In DE-A-3 048 529 (US-A-4,332,927) werden Zweikomponenten-PU-Systeme, die im ausgehärteten Zustand nicht zytotoxisch sind und sich für medizinische Trennvorrichtungen eignen, beschrieben. Diese enthalten als Katalysator eine dicarboxylierte Dialkylzinnverbindung. Mit Zinn-Schwefel-Verbindungen katalysierte PU-Vergußmassen für Hohlfaserdialysatoren werden in DD-A-155 777 beschrieben. Die genannten PU-Vergußmassen können zu medizinisch-technischen Geräten oder Formteilen hierfür verarbeitet und vor ihrem Gebrauch mit Ethylenoxid und/oder mit Gammastrahlen sterilisiert werden. Diese Art der Sterilisierung ist jedoch nachteilig, da sowohl Reste von Ethylenoxid als auch Spaltprodukte der Behandlung mit Gammastrahlen bei den Patienten ein Gesundheitsrisiko bedeuten kann. Ein weiterer Nachteil der beschriebenen Vergußmassen besteht darin, daß sie nicht mit jedem Fasertyp verarbeitet werden können. So können beispielsweise Cellulosefasern durch Rizinusöl enthaltende Vergußmassen geschädigt werden. Ein weiterer Nachteil besteht darin, daß die Vergußmassen oft sehr schnell nachhärten und häufig bereits nach wenigen Stunden nicht mehr geschnitten werden können.

Zur Überwindung der genannten Nachteile werden in EP-A-393 545 und EP-A- 413 265 transparente, heißdampfsterilisierbare, im wesentlichen kompakte PU-Vergußmassen beschrieben, die unter Verwendung von Diphenylmethandiisocyanaten, die mit ausgewählten Verbindungen modifiziert wurden, herstellbar sind. In EP-A-393 545 werden bei Raumtemperatur flüssige, modifizierte MDI, hergestellt durch Umsetzung einer Mischung aus 2,4' und 4,4'-MDI mit einem trifunktionellen Polyoxypropylenpolyol, als eine Ausgangskomponente der Vergußmassen beschrieben. Gemäß EP-A- 413 265 werden die modifizierten MDI erhalten durch Umsetzung einer Mischung aus 2,4' und 4,4'-MDI mit speziellen, mindestens tetrafunktionellen Polyetherpolyolen. Die aus diesen Aufbaukomponenten hergestellten PU-Vergußmassen besitzen eine erhöhte Temperaturbeständigkeit und eine verbesserte Hydrolysebeständigkeit. Ferner weisen diese Vergußmassen niedrigere Härtungstemperaturen auf. Nachteilig ist jedoch, daß nach mehrmaligen Sterilisationen Haftungsprobleme zwischen den Vergußmassen und anderen Werkstoffen, insbesondere den als Gehäusematerial der Dialysatoren eingesetzten Polycarbonaten, auftreten.

Um diesen Mangel zu beheben, wurde in EP-A-538 673 vorgeschlagen, spezielle Polyetherpolyole zu verwenden, die einen Gehalt an Kaliumionen von 150 bis 1200 ppm aufweisen. Damit konnten die Haftungsprobleme zwar überwunden werden, es konnten jedoch, insbesondere bei Dialysatoren, die einen hohen Anteil an Hohlfasern enthielten, Tränkschwierigkeiten auftreten. Dies führt zu einem erhöhten Ausschuß in der Produktion.

Aufgabe der Erfindung war es, transparente, heißdampfsterilisierbare, nicht zytotoxische Polyurethan-Vergußmassen, Verfahren zu ihrer Herstellung und ihre Verwendung, insbesondere für medizinisch-technische Artikel zu entwickeln, die eine gute Haftung mit anderen Materialien aufweisen sowie eine gute Verarbeitung, insbesondere eine gute Tränkung der Hohlfasern, ermöglichen und deren Einsatzkomponenten niederviskos und lagerstabil sind.

Die Aufgabe konnte überraschenderweise gelöst werden, indem zur Herstellung der Vergußmassen Isocyanatkomponenten eingesetzt wurden, die eine Viskosität von maximal 1500 mPa.s bei 25°C, gemessen mit einem Haake-Viskosimeter VT 500, Typ 001-5583, Meßsystem MV 1, Hersteller Firma Haake, aufweisen, sowie Rizinusöl als Einsatzkomponente eingesetzt wurde.

Gegenstand der Erfindung sind demzufolge transparente, heißdampfsterilisierbare, nicht zytotoxische Polyurethan-Vergußmassen, die hergestellt werden durch Umsetzung von
a) modifizierten Diphenylmethan-Diisocyanaten mit
b) Verbindungen mit mindestens zwei mit Isocyanatgruppen reaktiven Wasserstoffatomen in Gegenwart oder Abwesenheit von
c) Katalysatoren,
dadurch gekennzeichnet, daß die modifizierten Diphenylmethan-Diisocyanate a) eine Viskosität bei 25°C von maximal 1500 mPa.s, gemessen mit einem Haake-Viskosimeter VT 500, aufweisen sowie zur Herstellung der modifizierten Diphenylmethan-Diisocyanate a) und als Komponente b) Rizinusöl verwendet wird.

Gegenstand der Erfindung ist weiterhin ein Verfahren zur Herstellung von transparenten, heißdampfsterilisierbaren, nicht zytotoxischen Polyurethan-Vergußmassen durch Umsetzung von
a) modifizierten Diphenylmethan-Diisocyanaten mit
b) Verbindungen mit mindestens zwei mit Isocyanatgruppen reaktiven Wasserstoffatomen in Gegenwart oder Abwesenheit von
c) Katalysatoren,
dadurch gekennzeichnet, daß die modifizierten Diphenylmethan-Diisocyanate a) eine Viskosität bei 25°C von maximal 1500 mPa.s, gemessen mit einem Haake-Viskosimeter VT 500, aufweisen und zur Herstellung der modifizierten Diphenylmethan-Diisocyanate a) und als Komponente b) Rizinusöl verwendet wird.

Gegenstand der Erfindung ist weiterhin die Verwendung der transparenten, heißdampfsterilisierbaren, nicht zytotoxischen Polyurethan-Vergußmassen zur Herstellung von medizinisch-technischen Artikeln, insbesondere Dialysatoren.

Wie ausgeführt, besitzt die Komponente a) eine Viskosität von maximal 1500 mPa.s, gemessen mit einem Haake-Viskosimeter VT 500. Insbesondere liegt die Viskosität der Komponente a) im Bereich zwischen 300 mPa.s und 1500 mPa.s, gemessen mit einem Haake-Viskosimeter VT 500. Die Werte für die Viskosität beziehen sich auf die gesamte Komponente a), das heißt auf die Mischung aller in dieser Komponente verwendeten Bestandteile.

In einer bevorzugten Ausführungsform der vorliegenden Erfindung enthalten die modifizierten Polyisocyanate a) ein Polyisocyanat, das einen Gehalt an Uretonimin-Gruppen von vorzugsweise 10 bis 30 Gew.-%, aufweist. Bei dem erfindungsgemäß verwendeten Uretonimingruppen enthaltenden Diisocyanat handelt es sich vorzugsweise um ein Isocyanatgemisch, welches zu ca. 71 Gew.-% aus 4,4'-Diisocyanatodiphenylmethan besteht. Der Rest, bezogen auf 100 Gew.-% besteht aus Uretonimin. Der NCO-Gehalt des erfindungsgemäß eingesetzten Uretonimingruppen enthaltenden Diisocyanats beträgt vorzugsweise 29 bis 31 Gew.-%, insbesondere 29,3-29,7 Gew.-%. Die Viskosität bei 25°C beträgt 40 bis 50 mPa·s, gemessen mit einem Haake-Viskosimeter VT 500. Das in dieser Ausführungsform der Erfindung verwendete Uretonimingruppen enthaltende Isocyanat wird vorzugsweise hergestellt durch Umsetzung von 4,4'-MDI mittels eines Phospholen-Katalysators. Derartige Produkte werden beispielsweise von der BASF AG unter dem Handelsnamen Lypranat® MM 103 angeboten. Die Modifizierung von Isocyanaten durch Einbau und Bildung von Uretonimingruppen ist bekannt. Sie ist beispielsweise beschrieben im Kunststoff-Handbuch, Band 7, "Polyurethane", Carl-Hauser Verlag München, Wien, 3. Auflage, 1993, Seite 15.

Der Anteil der Uretonimingruppen enthaltenden Polyisocyanate an der Gesamtmenge an Polyisocyanaten a) beträgt vorzugsweise 1 bis 90 Gew.-%, besonders bevorzugt 1 bis 50 Gew.-% und insbesondere 1 bis 30 Gew.-%, jeweils bezogen auf das Gewicht der Polyisocyanate a).

In einer weiteren bevorzugten Ausführungsform der vorliegenden Erfindung enthalten die modifizierte Polyisocyanate a) Umsetzungsprodukte von Polyisocyanaten mit Verbindungen mit mindestens zwei mit Isocyanatgruppen reaktiven Wasserstoffatomen eingesetzt, deren Viskosität kleiner 1500 mPa.s, besonders bevorzugt im Bereich zwischen 600 und 800 mPa.s bei 25°C, liegt.

Als modifizierte MDI besonders bewährt haben sich in diesem Fall Urethangruppen gebunden enthaltende NCO-Prepolymere mit einem NCO-Gehalt 24 bis 15 Gew.-%, vorzugsweise von 22 bis 17 Gew.-%, die hergestellt werden durch Umsetzung von, bezogen auf das Gesamtgewicht, mindesten 85 Gew.-%, vorzugsweise 90 bis 96 Gew.-% eines NCO-gruppenhaltigen Prepolymeren mit einem NCO-Gehalt von 29 bis 21 Gew.-%, vorzugsweise von 26 bis 22 Gew.-%, das seinerseits hergestellt wird durch Umsetzung von 4,4' MDI mit Dipropylenglykol oder mindestens einem Polyoxypropylenglykol mit einer Hydroxyzahl bis 400 mgKOH/g, vorzugsweise von 50 bis 250 oder einer Mischung aus Dipropylenglykol und mindestens einem Polyoxypropylenglykol mit einer Hydroxyzahl bis 400 mgKOH/g mit maximal 5 Gew.-%, vorzugsweise 0,5 bis 4 Gew.-% Rizinusöl oder maximal 15 Gew.-% eines mit Glycerin, Trimethylolpropan gestarteten Polyoxyalkylen-polyols mit einer Hydroxylzahl von 90 bis 200 mgKOH/g und einem Alkaligehalt von kleiner als 10 ppm aus der Gruppe der Polyoxypropylen-, Polyoxypropylen-polyoxyethylen- und Polyoxyethylen-polyoxypropylen-polyole.

Die unter Verwendung von Uretonimingruppen enthaltenden Polyisocyanaten hergestellten Polyisocyanate a) besitzen vorzugsweise Viskositäten von 70 bis 110 mPa.s bei 25°C. Die ohne Verwendung von Uretonimingruppen enthaltenden Polyisocyanaten hergestellten Polyisocyanate a) besitzen vorzugsweise eine Viskosität von 200 bis 1200 mPa.s bei 25°C, jeweils gemessen mit einem Haake-Viskosimeter VT 500. Die beschriebenen, ohne Verwendung von Uretonimingruppen enthaltenden Polyisocyanaten hergestellten Polyisocyanate a) werden wegen der zu ihrer Herstellung eingesetzten kurzkettigen Polyole auch Quasipräpolymere genannt. Derartige Verbindungen können auch als Starter für höherviskose Prepolymere eingesetzt werden.

In einer weiteren bevorzugten Ausführungsform der vorliegenden Erfindung werden als modifizierte Polyisocyanate Gemische aus den beschriebenen Uretonimingruppen enthaltenden Polyisocyanaten und den beschriebenen Quasiprepolymeren verwendet. Der Anteil der Uretonimingruppen enthaltenden Polyisocyanate an dieser Mischung beträgt vorzugsweise 1 bis 50 Gew.-%, besonders bevorzugt 1 bis 30 Gew.-% und insbesondere 1 bis 20 Gew.-%, jeweils bezogen auf das Gewicht der Polyisocyanate a), der sich zu 100 Gew-.% ergänzende Rest besteht aus den beschriebenen Quasiprepolymeren.

In einer weiteren bevorzugten Ausführungsform der vorliegenden Erfindung werden als Polyisocyanate Gemische aus den beschriebenen Quasiprepolymeren mit Diphenylmethandiisocyanat-Isomeren (MDI) eingesetzt. Als Diphenylmethandiisocyanat-Isomeren werden vorzugsweise Gemische aus 4,4'-MDI und 2,4'-MDI eingesetzt. Das Gewichtsverhältnis von 4,4'-MDI zu 2,4'-MDI liegt dabei vorzugsweise im Bereich von 1:4 bis 4:1, wobei Gemische im Verhältnis von 1:1,5 bis 1,5:1 bevorzugt sind.

Die genannten Polyisocyanate werden einzeln oder im Gemisch miteinander mit einem stöchiometrischen Unterschuß an Rizinusöl umgesetzt und gelangen in dieser Form als modifizierte Polyisocyanate zum Einsatz. Die Umsetzung mit dem Rizinusöl muß dabei so geführt werden, daß die Viskosität der Polyisocyanate a) nicht über den Wert von 1500 mPa.s ansteigt.

Vorzugsweise sollte die Komponente a) einen Gehalt an Isocyanat-gruppen im Bereich zwischen 19 bis 32 Gew.-%, besonders bevorzugt 19 bis 23 insbesondere zwischen 20,5 und 22 Gew.-%, aufweisen.

Um die Bildung von Harnstoffgruppen, die unerwünscht ist, zu vermeiden, sollte das Rizinusöl vor der Umsetzung mit den Polyisocyanaten entwässert werden, beispielsweise durch Destillation.

Als Verbindung mit mindestens zwei mit Isocyanatgruppen reaktiven Wasserstoffatomen b) wird Rizinusöl eingesetzt. Aus den oben genannten Gründen sollte das Rizinusöl vor der Umsetzung entwässert werden.

In einer bevorzugten Ausführungsform der Erfindung wird als Komponente b) Rizinusöl im Gemisch mit weiteren Verbindungen mit mindestens zwei mit Isocyanatgruppen reaktiven Wasserstoffatomen eingesetzt werden. Bevorzugt kommen als weitere Verbindungen mit mindestens zwei mit Isocyanatgruppen reaktiven Wasserstoffatomen Polyetherole zum Einsatz. Vorzugsweise werden Polyetherole mit einer Funktionalität von 3 bis 8 und einer Hydroxylzahl von 200 bis 1000 mgKOH/g eingesetzt.

In einer besonders bevorzugten Ausführungsform der Erfindung weist mindestens einer der Polyetherole der Komponente b) einen Gehalt an Alkaliionen, vorzugsweise Kaliumionen, von 150 ppm bis 1500 ppm, vorzugsweise 200 bis 1000 ppm und insbesondere 400 bis 600 ppm auf.

Als Polyether-polyole mit Alkaliionengehalt von 50 bis 1200 ppm können die an sich bekannten Polyetheralkohole mit einer mittleren Funktionalität von 3 bis 8 und einer Hydroxyzahl von 200 bis 1000 verwendet werden mit der Maßgabe, daß die Polyetheralkohole direkt mit dem erforderlichen Alkaliionengehalt hergestellt werden oder vorzugsweise durch eine geeignete Methode der Alkaliionengehalt von handelsüblichen Polyetheralkoholen, die üblicherweise eine Alkaliionengehalt von kleiner 10 ppm besitzen, erhöht wird. Zu diesem Zwecke können die Polyetheralkohole mit wäßrigem Alkalihydroxid, vorzugsweise einer wäßrigen Kaliumhydroxidlösung, oder alkoholischen Alkalialkoholatlösungen, vorzugsweise alkoholischen Kaliumalkoholatlösungen, in den erforderlichen Mengen bei Raumtemperatur oder erhöhten Temperaturen, z.B. bei 20 bis 120°C behandelt werden. Danach wird das zugesetzte und gebildete Wasser bzw. der Alkohol bei einer Temperatur im Bereich von 70 bis 110°C, gegebenenfalls unter vermindertem Druck, z.B. von 0,01 bis 1 mbar, abdestilliert.

Als Polyetheralkohole mit erhöhten Gehalt an Alkaliionen bewährt haben sich z.B. mit Trimethylolpropan gestartete Polyoxyethylen-polyole mit einer Hydroxyzahl im Bereich von 632 bis 970 und einem Kaliumionengehalt im Bereich von 150 bis 600 ppm und mit Glycerin oder Trimethylolpropan oder einer einer Mischung aus Glycerin und Trimethylolpropan gestartete Polyoxypropylenpolyole mit einer Hydroxylzahl im Bereich von 210 bis 480 und einem Kaliumionengehalt im Bereich von 450 bis 600 ppm. Als alkalireiche Polyetheralkohole eignen sich ferner z.B. Polyoxypropylenpolyole mit einer mittleren Funktionalität von 4 bis 8, vorzugsweise von 4 bis 6 und einer Hydroxyzahl von 230 bis 500 mgKOH/g, vorzugsweise von 250 bis 380 mgKOH/g, die erhalten werden unter Verwendung von Sucrose oder vorzugsweise Sorbit oder Mischungen aus Sucrose und Sorbit als Startermoleküle, wobei als Costarter zusätzlich Wasser, Propylenglykol, Glycerin oder Mischungen aus mindestens zwei der genannten Costarter mitverwendet werden können, mit der Maßgabe, daß die Polyether-polyole einen Alkaliionengehalt, vorzugsweise Kaliumionengehalt, von 50 bis 1000 ppm, vorzugsweise 100 bis 700 ppm besitzen. In Betracht kommen ferner Polyoxypropylen- und/oder Polyoxyethylen-polyole mit einem Alkaliionengehalt von 150 bis 800 ppm und einer Hydroxyzahl von 450 bis 750, die erhalten werden können durch Umsetzung von Pentaerythrit oder einer Mischung aus Pentaerythrit und Glycerin und/oder Trimethylolpropan, zweckmäßigerweise in einem Molverhältnis von Pentaerythrit zu Glycerin und/oder Trimethylolpropan von 1:1, mit 1,2-Propylenoxid oder Ethylenoxid. Als alkalireiche Polyether-polyole verwendbar sind auch Polyoxypropylen-polyoxyethylen-polyole, die z.B. erhalten werden durch Polyaddition von 1,2-Propylenoxid und Ethylenoxid in einem Molverhältnis von 1:1 bis 1:8, vorzugsweise von 1:1 bis 1:3 an Glycerin, Trimethylolpropan oder eine Mischung aus Glycerin und Trimethylolpropan als Startermoleküle, mit einer Hydroxyzahl von 350 bis 950, vorzugsweise von 380 bis 600 und einem Alkaliionengehalt, vorzugsweise Kaliumionengehalt, von 50 bis 800 ppm, vorzugsweise von 100 bis 600 ppm, oder durch Polyaddition von 1,2-Propylenoxid und Ethylenoxid in einem Molverhältnis von 1:1 bis 1:8, vorzugsweise von 1:1 bis 1:3 an Sucrose oder vorzugsweise Sorbit oder Mischungen aus Sucrose und Sorbit als Startermoleküle, mit einer Hydroxyzahl von 200 bis 500, vorzugsweise von 230 bis 300 und einem Alkaliionengehalt, vorzugsweise Kaliumionengehalt von 50 bis 800 ppm, vorzugsweise von 100 bis 600 ppm. Die beispielhaft genanten Polyetherpolyole können einzeln oder in Form von Mischungen verwendet werden.

Die vorzugsweise verwendeten alkalireichen Polyetherpolyole besitzen eine Funktionalität von 2 bis 8 und vorzugsweise eine Hydroxylzahl von 50 bis 970 mgKOH/g, einen Alkaligehalt von 50 bis 1200 ppm. Derartige Polyetheralkohole werden beispielsweise in EP-A-538 673 beschrieben.
Die alkalireichen Polyetheralkohole gewährleisten eine rasche Durchhärtung der PU-Vergußmasse und führen somit zu einer Produktionssteigerung. Gleichzeitig verhindern sie eine unerwünschte Nachhärtung der PU-Vergußmassen, beispielsweise bei betriebsbedingten Abstellungen der Produktion.

Ihr Einsatz erfolgt vorzugsweise in einer Menge von 2 bis 10 Gew-.-%, bezogen auf das Gewicht der Komponente b).

Zu den Verbindungen mit mindestens zwei mit Isocyanatgruppen reaktiven Wasserstoffatomen gehören auch die sogenannten Vernetzungsmittel, die zur Modifizierung der mechanischen Eigenschaften gegebenenfalls eingesetzt werden können. Sofern Vernetzungsmittel zur Modifizierung der mechanischen Eigenschaften umgesetzt werden, finden zweckmäßigerweise Hydroxylgruppen enthaltende Vernetzungsmittel mit einer Funktionalität von 3 bis 8, vorzugsweise 3 bis 4 Verwendung. Beispielhaft genannt seien 3-und mehrwertige Alkohole, wie z.B. Glycerin, Trimethylolpropan, Pentaerythrit, 2,2,6,6-Tetrahydroxymethyl-4-heptandiol-1,7(Dipentaerythrit), Tripentaerythrit, Sorbit, Saccharose, Sorbitan und mit diesen Alkoholen gestartete niedermolekulare Polyoxypropylen-, Polyoxyethylen-, Polyoxypropylen-polyoxyethylen-polypolyole mit Molekulargewichten bis 600 g/mol, Sorbitantrioleat. Die genannten Vernetzer weisen zumeist Alkaligehalte von maximal 10 ppm auf.

Zusätzlich oder an Stelle der eingangs beschriebenen Polyetheralkohole können gegebenenfalls auch Polyesterole verwendet werden. Geeignete Polyesterole sind beispielsweise in EP-A-393 545, Spalte 5 und 6 beschrieben. Bevorzugt sind kurzkettige Polyesterole mit Hydroxylzahlen im Bereich von 150 bis 180 mgKOH/g. Geeignet sind auch Polyole, die sowohl Ether- als auch Estergruppen im Molekül enthalten.

Gegebenenfalls ist es erforderlich, insbesondere difunktionelle Kettenverlängerer einzusetzen. Die Kettenverlängerer können, falls erforderlich, sowohl mit den Verbindungen mit mindestens zwei mit Isocyanatgruppen reaktiven Wasserstoffatomen eingesetzt oder bei der Herstellung der Prepolymere eingesetzt werden. Beispielhaft für Kettenverlängerer seien genannt:

Niedermolekulare difunktionelle Alkohole, Ester- oder Ethergruppen als Brückenglieder gebunden enthaltende Glykole Beispielhaft seien genannt: Alkandiole mit 2 bis 10 Kohlenstoffatomen, vorzugsweise 2 bis 6 Kohlenstoffatomen, wie z.B. Ethandiol, Propandiol-1,2 oder -1,3, 2,2-Dimethyl-propandiol, 1,2 Propandiol, Butandiol-1,4, -1,3 oder -2,3, Pentandiol-1,5 oder -2,5, Hexandiol-1,6, 2,2,5-Trimethyl- oder 2,2,5,5- Tetramethylhexandiol 1,6; Cycloalkandiole und Alkylcycloalkandiole mit 6 bis 19 Kohlenstoffatomen, vorzugsweise 6 bis 15 Kohlenstoffatomen, wie z.B. 1,4-Dihydroxycyclohexan. 1-Hydroxymethyl-4-hydroxycyclohexan, 1,4-Bis-(hydroxymethyl)-cyclohexan, 4,4'-Dihydroxy-dicyclohexyl-methan oder -propan-2,2, Esterbrücken gebunden enthaltende Glykole, wie z.B. 3-Hydroxy-2,2-dimethylpropionsäure-2-hydroxyethylester, Terephthalsäure-bis-ethylenglykol oder -butandiol-1,4 und Etherbrücken gebunden enthaltende Glykole mit Molekulargewichten bis 378 wie z.B. Hydroxyalkylenether des Hydrochinons, beispielsweise 1,4-Di-(b-hydroxyethyl)-hydrochinon, Oxyalkylen-glykol mit 4 bis 8 Kohlenstoffatomen, wie z.B. Diethylen-, Dipropylen-, Dibutylenglykol, Tripropylenglykol sowie die entsprechenden höhermolekularen Oligomeren davon, wie z.B. Dioxyethylen-, Trioxyethylen-, Dioxypropylen-, Trioxypropylen-, Dioxybutylen-, Trioxybutylen- oder Tetraoxybutylenglykol. Die Dihydroxyverbindungen aus der Gruppe der Alkan-, Cycloalkan-, Alkylcycloalkyl-diole und der entsprechenden Ester- oder Etherbrücken gebunden enthaltenden Glykole können einzeln oder als Mischungen eingesetzt werden.

Die Kettenverlängerer können deshalb erforderlich sein, um insbesondere bei kälteren Außentemperaturen die Reaktion zum Anspringen zu bringen. Die Menge der Kettenverlängerer beträgt, bezogen auf das Gewicht der PU-Vergußmasse, 0,01 bis 10 Gew.-%.

Die erfindungsgemäßen PU-Vergußmassen können in Abwesenheit oder vorzugsweise in Anwesenheit von Katalysatoren hergestellt werden. Als Katalysatoren in Betracht kommen insbesondere organische Metallverbindungen, vorzugsweise organische Zinnverbindungen. Die organischen Zinnverbindungen als Katalysatoren können einzeln oder in Form von Katalysatorkombinationen eingesetzt werden. Als besonders vorteilhaft haben sich Kombinationen aus 1 bis 99 Gew.-%, jeweils bezogen auf das Gewicht der Katalysatorkombination, Mono-n-octylzinn-(2-ethylhexylthioglykolat) und 99 bis 1 Gew.-% Di-n-octylzinn-bis(2- ethylhexylthioglykolat) 94 Gew.-%, jeweils bezogen auf das Gewicht der Katalysatorkombination, Mono-n-octylzinn-(2-ethylhexylthioglykolat) und 6 Gew.-% Di-n-octylzinn-bis(2-ethylhexylthioglykolat) erwiesen. Die Katalysatoren werden üblicherweise in einer Menge von 0,001 bis 0,2 Gew.-Teilen, vorzugsweise 0,005 bis 0,015 Gew.-Teilen pro 100 Gew.-Teile der Komponente b), eingesetzt.

Zur Herstellung der erfindungsgemäßen PU-Vergußmassen werden die Komponenten a) und b), vorzugsweise in Anwesenheit von Katalysatoren, in solchen Mengen zur Reaktion gebracht, daß das Äquivalenzverhältnis von NCO-Gruppen der Komponente a) zur Summe der aktiven Wasserstoffatome der Komponente b) 0.9 bis 1,3:1, vorzugsweise 0,95 bis 1,2:1 und besonders bevorzugt 1,0 bis 1,1:1 beträgt. Hierzu werden die im wesentlichen vollständig entgasten Ausgangskomponenten bei Temperaturen von vorzugsweise 18 bis 70, vorzugsweise 22 bis 60°C intensiv gemischt. Die so erhaltene Reaktionsmischung wird in ein geeignetes Formwerkzeug eingebracht und über einen Zeitraum von 0,3 bis 4 Stunden, vorzugsweise 1 bis 3 Stunden, aushärten lassen.

Wie bereits dargelegt, finden die erfindungsgemäßen transparenten, heißdampfsterilisierbaren, nicht zytotoxischen Polyurethan-Vergußmassen insbesondere Verwendung zum Einbetten von Hohlfasern, wie z. B. Cuprophan-, vorzugsweise von Polysulfon-, Polycabonatfasern oder Cellulosehohlfasern in Dialysatoren, wobei die Dialysegeräte, insbesondere die Hülse für das Dialysefilter zweckmäßigerweise aus einem Polycarbonat auf der Basis von Bisphenol A besteht.

Die erfindungsgemäßen PU-Vergußmassen eignen sich ferner zur Herstellung von medizinisch-technischen Artikeln und zur Bindung von Biokeramikbeschichtungen auf Endprothesen.

Die erfindungsgemäßen PU-Vergußmassen sind nicht zytotoxisch, transparent, zeigen keine Wechselwirkung mit den Hohlfasern, besitzen starke Haftung zum Polycarbonat und sind ohne Zerstörung der eingebetteten Hohlfasern gut schneidbar.

Die erfindungsgemäß verwendeten modifizierten Diphenylmethan-Diisocyanate a) besitzen eine sehr geringe Viskosität. Dadurch ist eine optimale Tränkung der Hohlfasern gewährleistet, und es tritt keine Schädigung der Fasern auf. Weiterhin ist es möglich, den Volumenanteil der Hohlfasern im Gehäuse der Dialysatoren wesentlich, bis auf das Doppelte, zu erhöhen. Die Haftung der Vergußmassen am Gehäuse der Dialysatoren ist, unabhängig von der Art der eingesetzten Fasern, sehr gut.

Außerdem ist die Kristallisationsneigung der verwendeten modifizierten Diphenylmethan-Diisocyanate a) sehr gering, was zu einer guten Lagerstabilität des Polyurethansystems, auch bei niedrigen Temperaturen, führt.

Die Erfindung soll an den nachfolgenden Beispielen näher beschrieben werden.

### Beispiel 1

### a) Herstellung des modifizierten Diphenylmethan-Diisocyanats

70,5 Gew.-Teile eines modifizierten Diphenylmethandiisocyanats mit einem NCO-Gehalt von 23,0 Gew.-% (Lupranat® MP102 der BASF Aktiengesellschaft), welches hergestellt wurde durch Umsetzung von 4,4'-MDI mit einer Mischung aus Dipropylenglykol und einem Polyoxypropylenglykol mit einer Hydroxylzahl 250 und einem Kaliumionengehalt von 3 ppm im Gewichtsverhältnis von 1 : 0,6 und22 Gew.-Teile eines durch Einbau von 30 Gew.-%, bezogen auf 4,4' MDI, Uretonimingruppen modifizierten Diphenylmethandiisocyanats mit einem NCO-Gehalt von 29,5 Gew.-% (Lupranat®, MP103 der BASF Aktiengesellschaft) wurden gemischt und zu diesem Gemisch 7,5 Gew.-Teile entwässertes Rizinusöl mit einer Säurezahl von 0,6 mgKOH/g zugegeben. Nach beendeter Umsetzung wurde das Reaktionsgemisch auf Raumtemperatur abgekühlt.

Das entstandene Prepolymer hatte eine Viskosität bei 25°C von 1046 mPa·s, bestimmt mit einem Haake-Viskosimeter VT 500, und einen NCO-Gehalt von 21,3 Gew.-%.

94,45 Gew.-Teile entwässertes Rizinusöl mit einer Säurezahl von 0,6 mgKOH/g, 5,05 Gew.-Teile eines Polyetherols mit einer Hydroxylzahl von 932 mgKOH/g und einem Gehalt an Kaliumionen von 510 ppm, hergestellt durch Umsetzung von Trimethylolpropan und Ethylenoxid und 0,05 Gew.-Teile eines Zinnkatalysators Tinstab® OTS 16 der Firma Akros Chemicals GmbH u. Co.KG wurden zu einer Polyolkomponente vermischt. 100 Gew.-Teile dieser Polyolkomponente wurden mit 100 Gew.-Teilen des modifizierten Diphenylmethan-Diisocyanats aus Beispiel 1a zur Umsetzung gebracht .Das Reaktionssystem hatte eine Topf zeit von 368 Sekunden. Während der Reaktion stieg die Temperatur des Reaktionssystems auf 85,6°C an.

Der entstandene Formkörper hatte eine Shore A Härte von 98 und eine Shore D Härte von 60. Die PU-Vergußmasse war homogen.

### Beispiel 2

### a) Herstellung des modifizierten Diphenylmethan-Diisocyanats

78,52 Gew.-Teile Lupranat® MP102 und 13,85 Gew.-Teile eines Gemisches aus 2,4'MDI und 4,4'-MDI im Gewichtsverhältnis von 1:1 wurden vermischt und zu dieser Mischung 7,63 Gew.-Teile Rizinusöl gegeben. Das resultierende Prepolymer hatte einen NCO-Gehalt von 21,9 Gew.-% und eine Viskosität von 986 mPa.s bei 25°C, bestimmt mit einem Haake-Viskosimeter VT 500.

### b) Herstellung der PU-Vergußmasse

94,45 Gew.-Teile entwässertes Rizinusöl mit einer Säurezahl von 0,6 mgKOH/g, 5,05 Gew.-Teile eines Polyetherols mit einer Hydroxylzahl von 932 mgKOH/g und einem Gehalt an Kaliumionen von 510 ppm, hergestellt durch Umsetzung von Trimethylolpropan und Ethylenoxid und 0,05 Gew.-Teile eines Zinnkatalysators Tinstab® OTS 16 der Firma Akros Chemicals GmbH u. Co.KG wurden zu einer Polyolkomponente vermischt. 100 Gew.-Teile dieser Polyolkomponente wurden mit 100 Gew.-Teilen des modifizierten Diphenylmethan-Diisocyanats aus Beispiel 2a zur Umsetzung gebracht. Das Reaktionssystem hatte eine Topf zeit von 395 Sekunden. Während der Reaktion stieg die Temperatur des Reaktionssystems auf 86,6°C an.

Der entstandene Formkörper hatte eine Shore A Härte von 95,5 und eine Shore D Härte von 44. Die PU-Vergußmasse war homogen.

### Beispiel 3

### a) Herstellung des modifizierten Diphenylmethan-Diisocyanats

98,5 Gew-.Teile Lupranat® MP102 wurden mit 1,5 Gew.-Teilen entwässertem Rizinusöl umgesetzt. Das entstehende Prepolymere hatte einen NCO-Gehalt von 22,0 Gew.-% und eine Viskosität von 968 mPa.s bei 25 °C, bestimmt mit einem Haake-Viskosimeter VT 500.

### b) Herstellung der PU-Vergußmasse

94,45 Gew.-Teile entwässertes Rizinusöl mit einer Säurezahl von 0,6 mgKOH/g, 5,05 Gew.-Teile eines Polyetherols mit einer Hydroxylzahl von 932 mgKOH/g und einem Gehalt an Kaliumionen von 510 ppm, hergestellt durch Umsetzung von Trimethylolpropan und Ethylenoxid und 0,05 Gew.-Teile eines Zinnkatalysators Tinstab® OTS 16 der Firma Akros Chemicals GmbH u. Co. KG wurden zu einer Polyolkomponente vermischt. 100 Gew.-Teile dieser Polyolkomponente wurden mit 71,5 Gew.-Teilen des modifizierten Diphenylmethan-Diisocyanats aus Beispiel 3a zur Umsetzung gebracht .Das Reaktionssystem hatte eine Topfzeit von 345 Sekunden. Während der Reaktion stieg die Temperatur des Reaktionssystems auf 86,6°C an.

Der entstandene Formkörper hatte eine Shore A Härte von 98 und eine Shore D Härte von 63. Die PU-Vergußmasse war homogen.

## Patentansprüche

1. Transparente, heißdampfsterilisierbare, nicht zytotoxische Polyurethan-Vergußmassen, herstellbar durch Umsetzung von
a) modifizierten Polyisocyanaten mit
b) Verbindungen mit mindestens zwei mit Isocyanatgruppen reaktiven Wasserstoffatomen in Gegenwart oder Abwesenheit von
c) Katalysatoren,
**dadurch gekennzeichnet, daß** die modifizierten Diphenylmethan-Diisocyanate a) eine Viskosität bei 25°C von maximal 1500 mPa.s, gemessen mit einem Haake-Viskosimeter VT 500, aufweisen sowie zur Herstellung der modifizierten Diphenylmethan-Diisocyanate a) und als Komponente b) Rizinusöl verwendet wird.

2. Transparente, heißdampfsterilisierbare, nicht zytotoxische Polyurethan-Vergußmassen nach Anspruch 1, **dadurch gekennzeichnet, daß** die Komponente a) eine Viskosität bei 25°C von 300 bis 1500 mPa·s, gemessen mit einem Haake-Viskosimeter VT 500, aufweist.

3. Transparente, heißdampfsterilisierbare, nicht zytotoxische Polyurethan-Vergußmassen nach Anspruch 1, **dadurch gekennzeichnet, daß** die Komponente a) einen NCO-Gehalt im Bereich von 20 bis 32 Gew.-% aufweist.

4. Transparente, heißdampfsterilisierbare, nicht zytotoxische Polyurethan-Vergußmassen nach Anspruch 1, **dadurch gekennzeichnet, daß** die modifizierten Polyisocyanate a) modifizierte Diphenylmethan-Diisocyanate sind.

5. Transparente, heißdampfsterilisierbare, nicht zytotoxische Polyurethan-Vergußmassen nach Anspruch 1, **dadurch gekennzeichnet, daß** als modifizierte Polyisocyanate a) Polyisocyanate verwendet werden, die einen Gehalt an Uretonimin-Gruppen von vorzugsweise 10 bis 30 Gew.-% aufweisen.

6. Transparente, heißdampfsterilisierbare, nicht zytotoxische Polyurethan-Vergußmassen nach Anspruch 1, **dadurch gekennzeichnet, daß** die Polyisocyanate, die einen Gehalt an Uretonimin-Gruppen von vorzugsweise 10 bis 30 Gew.-% aufweisen, durch Einbau von Uretonimingruppen in 4,4'-Diphenylmethandiisocyanat herstellbar sind.

7. Transparente, heißdampfsterilisierbare, nicht zytotoxische Polyurethan-Vergußmassen nach Anspruch 1, **dadurch gekennzeichnet, daß** als Polyisocyanate a) Urethangruppen gebunden enthaltende NCO-Prepolymere mit einem NCO-Gehalt 24 bis 15 Gew.-%, die herstellbar sind durch Umsetzung von, bezogen auf das Gesamtgewicht, mindesten 85 Gew.-% eines NCO-gruppenhaltigen Prepolymeren mit einem NCO-Gehalt von 29 bis 21 Gew.-%, das seinerseits hergestellt wird durch Umsetzung von 4,4'-Diphenylmethandiisocyanat mit Dipropylenglykol oder mindestens einem Polyoxypropylenglykol mit einer Hydroxyzahl bis 400 mgKOH/g, oder einer Mischung aus Dipropylenglykol und mindestens einem Polyoxypropylenglykol mit einer Hydroxyzahl bis 400 mgKOH/g mit maximal 5 Gew.-%, Rizinusöl oder maximal 15 Gew.-% eines mit Glycerin, Trimethylolpropan gestarteten Polyoxyalkylen-polyols mit einer Hydroxylzahl von 90 bis 200 mgKOH/g und einem Alkaligehalt von kleiner als 10 ppm aus der Gruppe der Polyoxypropylen-, Polyoxypropylen-polyoxyethylen- und Polyoxyethylen-, polyoxypropylen-polyole.

8. Transparente, heißdampfsterilisierbare, nicht zytotoxische Polyurethan-Vergußmassen nach Anspruch 1, **dadurch gekennzeichnet, daß** die modifizierten Polyisocyanate a) herstellbar sind durch Umsetzung von i) Polyisocyanaten, die einen Gehalt an Uretonimin-Gruppen von vorzugsweise 10 bis 30 Gew.-% aufweisen, oder ii) Urethangruppen gebunden enthaltenden NCO-Prepolymere mit einem NCO-Gehalt 24 bis 15 Gew.-%, die herstellbar sind durch Umsetzung von, bezogen auf das Gesamtgewicht, mindesten 85 Gew.-% eines NCO-gruppenhaltigen Prepolymeren mit einem NCO-Gehalt von 29 bis 21 Gew.-%, das seinerseits hergestellt wird durch Umsetzung von 4,4'-Diphenylmethandiisocyanat mit Dipropylenglykol oder mindestens einem Polyoxypropylenglykol mit einer Hydroxyzahl bis 400 mgKOH/g, oder einer Mischung aus Dipropylenglykol und mindestens einem Polyoxypropylenglykol mit einer Hydroxyzahl bis 400 mgKOH/g mit maximal 5 Gew.-%, Rizinusöl oder maximal 15 Gew.-% eines mit Glycerin, Trimethylolpropan gestarteten Polyoxyalkylen-polyols mit einer Hydroxylzahl von 90 bis 200 mgKOH/g und einem Alkaligehalt von kleiner als 10 ppm aus der Gruppe der Polyoxypropylen-, Polyoxypropylen-polyoxyethylen- und Polyoxyethylen-, polyoxypropylen-polyolen oder Gemischen aus i) und ii) oder Gemischen von i) und/oder ii) mit anderen Isocyanaten mit Rizinusöl.

9. Transparente, heißdampfsterilisierbare, nicht zytotoxische Polyurethan-Vergußmassen nach Anspruch 1, **dadurch gekennzeichnet, daß** als Komponente b) Rizinusöl verwendet wird.

10. Transparente, heißdampfsterilisierbare, nicht zytotoxische Polyurethan-Vergußmassen nach Anspruch 1, **dadurch gekennzeichnet, daß** als Komponente b) ein Gemisch aus Rizinusöl und mindestens einem Polyetherol verwendet wird.

11. Transparente, heißdampfsterilisierbare, nicht zytotoxische Polyurethan-Vergußmassen nach Anspruch 8, **dadurch gekennzeichnet, daß** im Gemisch mit Rizinusöl in der Komponente b) Polyetherole mit einer Funktionalität von 3 bis 8 und einer Hydroxylzahl im Bereich von 200 bis 1000 mgKOH/g verwendet werden.

12. Transparente, heißdampfsterilisierbare, nicht zytotoxische Polyurethan-Vergußmassen nach Anspruch 8, **dadurch gekennzeichnet, daß** mindestens einer der in der Komponente b) verwendeten Polyetherole einen Gehalt an Alkaliionen von 150 bis 1000 ppm aufweist.

13. Verfahren zur Herstellung von transparenten, heißdampfsterilisierbaren, nicht zytotoxischen Polyurethan-Vergußmassen durch Umsetzung von
a) modifizierten Diphenylmethan-Diisocyanaten mit
b) Verbindungen mit mindestens zwei mit Isocyanatgruppen reaktiven Wasserstoffatomen in Gegenwart oder Abwesenheit von
c) Katalysatoren,
**dadurch gekennzeichnet, daß** die modifizierten Diphenylmethan-Diisocyanate a) eine Viskosität bei 25°C von maximal 1500 mPa.s, gemessen mit einem Haake-Viskosimeter VT 500, aufweisen sowie zur Herstellung der modifizierten Diphenylmethan-Diisocyanate a) und als Komponente b) Rizinusöl verwendet wird.

14. Verwendung von transparenten, heißdampfsterilisierbaren, nicht zytotoxischen Polyurethan-Vergußmassen gemäß Anspruch 1 zur Herstellung von medizinisch-technischen Artikeln; insbesondere Dialysatoren.

## Claims

1. A transparent, non-cytotoxic polyurethane embedding composition which can be sterilized by superheated steam and can be prepared by reacting
a) modified polyisocyanates with
b) compounds having at least two hydrogen atoms reactive toward isocyanate groups, in the presence or absence of
c) catalysts,
which comprises using modified diphenylmethane diisocyanates a) which have a viscosity of not more than 1500 mPa.s at 25°C, measured using a Haake VT 500 viscometer, and using castor oil as component b) and/or to prepare the modified diphenylmethane diisocyanate a).

2. A transparent, non-cytotoxic polyurethane embedding composition which can be sterilized by superheated steam, as claimed in claim 1, where component a) has a viscosity of from 300 to 1500 mPa·s, measured using a Haake VT 500 viscometer.

3. A transparent, non-cytotoxic polyurethane embedding composition which can be sterilized by superheated steam, as claimed in claim 1, wherein component a) has an NCO content of from 20 to 32% by weight.

4. A transparent, non-cytotoxic polyurethane embedding composition which can be sterilized by superheated steam, as claimed in claim 1, wherein the modified polyisocyanates a) are modified diphenylmethane diisocyanates.

5. A transparent, non-cytotoxic polyurethane embedding composition which can be sterilized by superheated steam, as claimed in claim 1, wherein the modified polyisocyanates a) used comprise polyisocyanates which have a content of preferably from 10 to 30% by weight of uretonimine groups.

6. A transparent, non-cytotoxic polyurethane embedding composition which can be sterilized by superheated steam, as claimed in claim 1, wherein the polyisocyanates which have a content of preferably from 10 to 30% by weight of uretonimine groups can be prepared by incorporating uretonimine groups into diphenylmethane 4,4'-diisocyanate.

7. A transparent, non-cytotoxic polyurethane embedding composition which can be sterilized by superheated steam, as claimed in claim 1, wherein the polyisocyanates a) used comprise NCO prepolymers containing urethane groups and having an NCO content of from 24 to 15% by weight, which can be prepared by reacting, based on the total weight, at least 85% by weight of a prepolymer containing NCO groups and having an NCO content of from 29 to 21% by weight, itself prepared by reacting diphenylmethane 4,4'-diisocyanate with dipropylene glycol or with at least one polyoxypropylene glycol having a hydroxyl number of up to 400 mg KOH/g, or with a mixture made from dipropylene glycol and at least one polyoxypropylene glycol having a hydroxyl number of up to 400 mg KOH/g, with not more than 5% by weight of castor oil or not more than 15% by weight of a glycerol- or trimethylolpropane-started polyoxyalkylene polyol having a hydroxyl number of from 90 to 200 mg KOH/g and having an alkali metal content of less than 10 ppm and selected from the group consisting of polyoxypropylene polyols, polyoxypropylene polyoxyethylene polyols and polyoxyethylene polyoxypropylene polyols.

8. A transparent, non-cytotoxic polyurethane embedding composition which can be sterilized by superheated steam, as claimed in claim 1, wherein the modified polyisocyanates a) can be prepared by reacting i) polyisocyanates which have a content of preferably from 10 to 30% by weight of uretonimine groups or ii) NCO prepolymers which contain urethane groups and have an NCO contemt of from 24 to 15% by weight, which can be prepared by reacting, based on the total weight, at least 85% by weight of a prepolymer containing NCO groups and having an NCO content of from 29 to 21% by weight, itself prepared by reacting diphenylmethane 4,4'-diisocyanate with dipropylene glycol or with at least one polyoxypropylene glycol having a hydroxyl number of up to 400 mg KOH/g, or with a mixture made from dipropylene glycol and at least one polyoxypropylene glycol having a hydroxyl number of up to 400 mg KOH/g, with not more than 5% by weight of castor oil or not more than 15% by weight of a glycerol- or trimethylolpropane-started polyoxyalkylene polyol having a hydroxyl number of from 90 to 200 mg KOH/g and having an alkali metal content of less than 10 ppm and selected from the group consisting of polyoxypropylene polyols, polyoxypropylene polyoxyethylene polyols and polyoxyethylene polyoxypropylene polyols, or mixtures made from i) and ii), or mixtures of i) and/or ii) with other isocyanates, with castor oil.

9. A transparent, non-cytotoxic polyurethane embedding composition which can be sterilized by superheated steam, as claimed in claim 1, wherein castor oil is used as component b).

10. A transparent, non-cytotoxic polyurethane embedding composition which can be sterilized by superheated steam, as claimed in claim 1, wherein a mixture made from castor oil and at least one polyetherol is used as component b).

11. A transparent, non-cytotoxic polyurethane embedding composition which can be sterilized by superheated steam, as claimed in claim 8, wherein use is made of polyetherols having a functionality of from 3 to 8 and a hydroxyl number of from 200 to 1000 mg KOH/g in a mixture with castor oil in component b).

12. A transparent non-cytotoxic polyurethane embedding composition which can be sterilized by superheated steam, as claimed in claim 8, wherein at least one of the polyetherols used in component b) has a content of from 150 to 1000 ppm of alkali metal ions.

13. A process for preparing transparent, non-cytotoxic polyurethane embedding compositions which can be sterilized by superheated steam and are prepared by reacting
a) modified diphenylmethane diisocyanates with
b) compounds having at least two hydrogen atoms reactive toward isocyanate groups, in the presence or absence of
c) catalysts, which comprises using modified diphenylmethane diisocyanates a) which have a viscosity of not more than 1500 mPa.s at 25°C, measured using a Haake VT 500 viscometer, and using castor oil as component b) and/or to prepare the modified diphenylmethane diisocyanate a)

14. The use of transparent, non-cytotoxic polyurethane embedding compositions which can be sterilized by superheated steam, as claimed in claim 1, for producing items for medical engineering, in particular dialyzers.

## Revendications

1. Matières à couler transparentes, stérilisables à la vapeur surchauffée, non cytotoxiques, à base de polyuréthane, que l'on peut préparer par mise en réaction
a) de polyisocyanates modifiés
b) avec des composés contenant au moins deux atomes d'hydrogène aptes à réagir avec des groupes isocyanates, en présence ou en l'absence
c) de catalyseurs,
**caractérisées en ce que** les diphénylméthanediisocyanates modifiés a) présentent une viscosité maximale à 25°C de 1500 mPa.s, mesurée avec un viscosimètre de Haake VT 500, et **en ce qu'**on utilise, pour la préparation des diphénylméthanediisocyanates modifiés a) et à titre de composant b), de l'huile de ricin.

2. Matières à couler transparentes, stérilisables à la vapeur surchauffée, non cytotoxiques, à base de polyuréthane, selon la revendication 1, **caractérisées en ce que** le composant a) présente une viscosité à 25°C de 300 à 1500 mPa.s, mesurée avec un viscosimètre de Haake VT 500.

3. Matières à couler transparentes, stérilisables à la vapeur surchauffée, non cytotoxiques, à base de polyuréthane, selon la revendication 1, **caractérisées en ce que** le composant a) présente une teneur en groupes NCO dans la plage de 20 à 32 % en poids.

4. Matières à couler transparentes, stérilisables à la vapeur surchauffée, non cytotoxiques, à base de polyuréthane, selon la revendication 1,
**caractérisées en ce que** les polyisocyanates modifiés a) sont des diphénylméthanediisocyanates modifiés.

5. Matières à couler transparentes, stérilisables à la vapeur surchauffée, non cytotoxiques, à base de polyuréthane, selon la revendication 1, **caractérisées en ce qu'**on utilise, à titre de polyisocyanates modifiés a), des polyisocyanates qui présentent une teneur en groupes urétonimine de préférence de 10 à 30 % en poids.

6. Matières à couler transparentes, stérilisables à la vapeur surchauffée, non cytotoxiques, à base de polyuréthane, selon la revendication 1, **caractérisées en ce qu'**on peut préparer les polyisocyanates, qui présentent une teneur en groupes urétonimine de préférence de 10 à 30 % en poids, par incorporation de groupes urétonimine dans du 4,4'-diphénylméthanediisocyanate.

7. Matières à couler transparentes, stérilisables à la vapeur surchauffée, non cytotoxiques, à base de polyuréthane, selon la revendication 1, **caractérisées en ce qu'**on utilise, à titre de polyisocyanates a), des prépolymères NCO contenant des groupes uréthane à l'état lié, possédant une teneur en groupes NCO de 24 à 15 % en poids, que l'on peut préparer par mise en réaction de, rapportés au poids total, au moins 85 % en poids d'un prépolymère contenant des groupes NCO avec une teneur en groupes NCO de 29 à 21 % en poids, que l'on prépare, quant à lui, par mise en réaction du 4,4'-diphényl-méthanediisocyanate avec du dipropylèneglycol ou avec au moins un polyoxypropylèneglycol possédant un indice d'hydroxyle s'élevant jusqu'à 400 mg de KOH/g, ou avec un mélange de dipropylèneglycol et d'au moins un polyoxypropylèneglycol possédant un indice d'hydroxyle s'élevant jusqu'à 400 mg de KOH/g, avec un maximum de 5 % en poids d'huile de ricin ou un maximum de 15 % en poids d'un polyoxyalkylènepolyol amorcé avec du glycérol et du triméthylolpropane possédant un indice d'hydroxyle de 90 à 200 mg de KOH/g et une teneur en alcalis inférieure à 10 ppm, choisi parmi le groupe comprenant des polyoxypropylènepolyols, des polyoxy-propylènepolyoxyéthylènepolyols et des polyoxyéthylène-polyoxy-propylènepolyols.

8. Matières à couler transparentes, stérilisables à la vapeur surchauffée, non cytotoxiques, à base de polyuréthane, selon la revendication 1, **caractérisées en ce qu'**on peut préparer les polyisocyanates modifiés a) par mise en réaction de i) des polyisocyanates qui présentent une teneur en groupes urétonimine de préférence de 10 à 30 % en poids, ou de ii) des prépolymères NCO contenant des groupes uréthane à l'état lié, possédant une teneur en groupes NCO de 24 à 15 % en poids, que l'on peut préparer par mise en réaction de, rapportés au poids total, au moins 85 % en poids d'un prépolymère contenant des groupes NCO avec une teneur en groupes NCO de 29 à 21 % en poids, que l'on prépare, quant à lui, par mise en réaction du 4,4'-diphényl-méthanediisocyanate avec du dipropylèneglycol ou avec au moins un polyoxypropylèneglycol possédant un indice d'hydroxyle s'élevant jusqu'à 400 mg de KOH/g, ou avec un mélange de dipropylèneglycol et d'au moins un polyoxypropylèneglycol possédant un indice d'hydroxyle s'élevant jusqu'à 400 mg de KOH/g, avec un maximum de 5 % en poids d'huile de ricin ou un maximum de 15 % en poids d'un polyoxyalkylènepolyol amorcé avec du glycérol et du triméthylolpropane possédant un indice d'hydroxyle de 90 à 200 mg de KOH/g et une teneur en alcalis inférieure à 10 ppm, choisi parmi le groupe comprenant des polyoxypropylènepolyols, des polyoxy-propylènepolyoxyéthylènepolyols et des polyoxyéthylène-polyoxy-propylènepolyols, ou encore de mélanges de i) et de ii) ou bien de mélanges de i) et/ou de ii) avec d'autres isocyanates, avec de l'huile de ricin.

9. Matières à couler transparentes, stérilisables à la vapeur surchauffée, non cytotoxiques, à base de polyuréthane selon la revendication 1, **caractérisées en ce qu'**on utilise à titre de composant b), de l'huile de ricin.

10. Matières à couler transparentes, stérilisables à la vapeur surchauffée, non cytotoxiques, à base de polyuréthane selon la revendication 1, **caractérisées en ce qu'**on utilise à titre de composant b), un mélange d'huile de ricin et d'au moins un polyétherol.

11. Matières à couler transparentes, stérilisables à la vapeur surchauffée, non cytotoxiques, à base de polyuréthane selon la revendication 8, **caractérisées en ce qu'**on utilise, en mélange avec de l'huile de ricin dans le composant b) des polyétherols possédant une fonctionnalité de 3 à 8 et un indice d'hydroxyle dans la plage de 200 à 1000 mg de KOH/g.

12. Matières à couler transparentes, stérilisables à la vapeur surchauffée, non cytotoxiques, à base de polyuréthane selon la revendication 8, **caractérisées en ce qu'**au moins un des polyétherols utilisés dans le composant b) présente une teneur en ions de métaux alcalins de 150 à 1000 ppm.

13. Procédé pour la préparation de matières à couler transparentes, stérilisables à la vapeur surchauffée, non cytotoxiques, à base de polyuréthane, par mise en réaction
a) de diphénylméthane-diisocyanates modifiés
b) avec des composés contenant au moins deux atomes d'hydrogène aptes à réagir avec des groupes isocyanates, en présence ou en l'absence
c) de catalyseurs,
**caractérisé en ce que** les diphénylméthanediisocyanates modifiés a) présentent une viscosité maximale à 25°C de 1500 mPa.s, mesurée avec un viscosimètre de Haake VT 500, et **en ce qu'**on utilise, pour la préparation des diphénylméthanediisocyanates modifiés a) et à titre de composant b), de l'huile de ricin.

14. Utilisation de matières à couler transparentes, stérilisables à la vapeur surchauffée, non cytotoxiques, à base de polyuréthane selon la revendication 1, pour la fabrication d'articles techniques médicaux, en particulier de dialyseurs.
